# EUROPÄISCHE PATENTANMELDUNG

(11) **EP 4 685 633 A1**
(43) Veröffentlichungstag der Anmeldung: **28.01.2026**
(21) Anmeldenummer: 25187614.0
(22) Anmeldetag: 04.07.2025
(51) Int. Cl.: G06F 8/72, G06F 8/77, G06F 9/50, G06F 11/30, G06F 9/455, G06F 8/60

(54) **VERFAHREN ZUM ZERLEGEN UND VERTEILEN EINER MONOLITHISCHEN ANWENDUNG**

(30) Priorität: 22.07.2024 DE 102024206860
(71) Anmelder: Robert Bosch GmbH, 70442 Stuttgart (DE)
(72) Erfinder: Schneider, Peter, 71088 Holzgerlingen (DE); Rowe, Anthony, Pittsburgh PA, 15222 (US); Pourmohseni, Behnaz, 80999 Muenchen (DE); Smirnov, Fedor, 91056 Erlangen (DE)

(57) **Zusammenfassung**

Die Erfindung betrifft ein Verfahren (100) zum Zerlegen und Verteilen einer monolithischen Anwendung, das die folgenden Schritte umfasst:
- Einsetzen (101) der monolithischen Anwendung auf einer Datenverarbeitungsvorrichtung (1),
- Erzeugen (102) eines Verhaltensprofils der monolithischen Anwendung auf der Basis einer Analyse der monolithischen Anwendung während einer Laufzeit davon,
- Bestimmen (103) mindestens einer möglichen Zerlegung der monolithischen Anwendung in Module (2) auf der Basis des erzeugten Verhaltensprofils,
- Einleiten (104) eines Einsatzes der Module (2) auf einem verteilten System (3), um eine verteilte Anwendung bereitzustellen,
- Einleiten (105) einer Überwachung eines Laufzeitverhaltens der verteilten Anwendung,
- Einleiten (106) einer Optimierung der Zerlegung und des Einsatzes der Module (2) durch Maximieren einer Ähnlichkeit zwischen der monolithischen Anwendung und der verteilten Anwendung.

Ferner betrifft die Erfindung ein Computerprogramm, eine Vorrichtung und ein Speicherungsmedium für diesen Zweck.

## Beschreibung

Die Erfindung betrifft ein Verfahren zum Zerlegen und Verteilen einer monolithischen Anwendung. Ferner betrifft die Erfindung ein Computerprogramm, eine Vorrichtung und ein Speicherungsmedium für diesen Zweck.

### Stand der Technik

Um verteilte Rechenressourcen in verteilten Systemen zu nutzen (z. B. um Robustheit und/oder Effizienz zu gewinnen), muss Anwendungssoftware modularisiert werden, um zu den Fähigkeiten eines verteilten Systems (z. B. Rechenknoten-Ressourcenbeschränkungen oder Beschränkungen bezüglich Kommunikation zwischen Knoten) zu passen.

Das Zerlegen monolithischer Anwendungssoftware in eine Menge von Softwaremodulen, die in modulareren, verteilten Softwarearchitekturen (z. B. auf Mikroservice basierende Architektur) verwendbar sind, ist kostspielig oder praktisch unmöglich (z. B. aufgrund des Fehlens eines ausführlichen Verständnisses für einige Teile veralteter Software). Während der Zerlegung monolithischer Anwendungen führt jede mögliche Aufteilung der Anwendung zu einer bestimmten Menge von Softwaremodulen, die auf verschiedenen Ressourcen getrennt eingesetzt und ausgeführt werden können. Aufgrund des kohäsiven Charakters der meisten monolithischen Anwendungen weisen diese Module jedoch in der Regel Datenabhängigkeiten zueinander auf.

Eine Aufteilung zu finden, die den besten Kompromiss zwischen Einsatzflexibilität und zusätzlichem Netzwerkverkehr bietet, stellt bereits ein schwieriges Problem dar und ist der Fokus eines großen Teils existierender Zerlegungsansätze, die meistens auf statisch analysierbaren Codeeigenschaften basieren, wie etwa Kopplung oder Kohäsion oder Eigenschaften von Softwareschnittstellen. Neuere Ansätze zur Parallelisierung oder Zerlegung von Anwendungen zeigen, dass es möglich ist, eine günstige Zerlegung von Programmen, die in LLVM IR (einer Bytecode ähnlichen Zwischenrepräsentation) gegeben sind, automatisch zu erlernen oder zu optimieren und die Abbildung von Programmkomponenten auf die Prozessorkerne eines Mehrkernsystems zu optimieren. Dennoch berücksichtigen diese Ansätze nicht echtzeitkritisches Verhalten von Anwendungen.

Die folgenden verwandten Techniken sind gemäß dem Stand der Technik und wissenschaftlichen Veröffentlichungen bekannt: Aufteilen von Code monolithischer Anwendungen in mehrere kleinere Module auf der Basis von statischer Analyse von Code und/oder Zwischenrepräsentationen von Code (z. B. Bytecode) über existierende Untersuchungs- und Zerlegungstechniken. Automatische Zerlegung von Anwendungscode auf der Basis einer Zwischenrepräsentation (z. B. Bytecode), gefolgt von einer automatisierten Ressourcenabbildung der resultierenden Anwendungscodemodule auf die Verarbeitungskerne eines Mehrkernsystems zur Optimierung der Rechenressourcen-Auslastung und/oder Anwendungsleistungsfähigkeit. Orchestrierung von manuell zerlegten (z. B. "containerisierten") Anwendungsmodulen auf mehrere verteilte (d.h., über Netzwerk verbundene) Rechenressourcen.

### Offenbarung der Erfindung

Gemäß Aspekten der Erfindung werden ein Verfahren mit den Merkmalen von Anspruch 1, ein Computerprogramm mit den Merkmalen von Anspruch 8, eine Datenverarbeitungsvorrichtung mit den Merkmalen von Anspruch 9 sowie ein computerlesbares Speicherungsmedium mit den Merkmalen von Anspruch 10 bereitgestellt. Weitere Merkmale und Einzelheiten der Erfindung werden in den jeweiligen abhängigen Ansprüchen, in der Beschreibung und in den Zeichnungen offenbart. Merkmale und Einzelheiten, die im Kontext des erfindungsgemäßen Verfahrens beschrieben werden, entsprechen in jedem Fall auch dem erfindungsgemäßen Computerprogramm, der erfindungsgemäßen Datenverarbeitungsvorrichtung sowie dem erfindungsgemäßen computerlesbaren Speicherungsmedium und umgekehrt.

Gemäß einem Aspekt der Erfindung wird ein Verfahren zum Zerlegen und Verteilen einer monolithischen Anwendung bereitgestellt, wobei das Verfahren die folgenden Schritte umfasst, wobei die Schritte wiederholt und/oder in einer spezifischen Reihenfolge ausgeführt werden können. Eine monolithische Anwendung kann sich auf eine Softwarearchitektur beziehen, bei der alle Komponenten und Funktionalitäten der Anwendung eng in eine einzige kohäsive Einheit integriert sind. Bei dieser Art von Architektur kann die gesamte Anwendung als eine einzige Entität aufgebaut, eingesetzt und skaliert werden.

In einem ersten möglichen Schritt wird die monolithische Anwendung auf einer Datenverarbeitungsvorrichtung eingesetzt. Die Datenverarbeitungsvorrichtung kann ein Server sein. Um die monolithische Anwendung auf der Datenverarbeitungsvorrichtung einzusetzen, können die folgenden Schritte unternommen werden:
- Kopieren der monolithischen Anwendung auf die Datenverarbeitungsvorrichtung,
- Konfigurieren der monolithischen Anwendung, auf der Datenverarbeitungsvorrichtung zu laufen, durch Einstellen der entsprechenden Umgebungsvariablen und Systemeinstellungen,
- Starten der monolithischen Anwendung und Sicherstellen, dass sie korrekt auf der Datenverarbeitungsvorrichtung läuft.

In einem nächsten möglichen Schritt wird auf der Basis einer Analyse der monolithischen Anwendung während einer Laufzeit dieser ein Verhaltensprofil der monolithischen Anwendung erzeugt. Das Verhaltensprofil der monolithischen Anwendung kann ferner auf der Basis einer statischen Analyse der monolithischen Anwendung verbessert werden. Das Verhaltensprofil kann eine ausführliche Beschreibung repräsentieren, wie sich die Anwendung in verschiedenen Szenarien und Bedingungen verhält. Es kann Informationen über Funktionalität, Merkmale der Anwendung und Interaktionen mit Benutzern, ein Betriebssystem eines Hosts der monolithischen Anwendung und von anderen Systemen umfassen. Das Verhaltensprofil kann auch Informationen über Leistungsfähigkeit, Sicherheit und Zuverlässigkeit der Anwendung umfassen. Die statische Analyse kann eine Analyse eines Bytecodes der monolithischen Anwendung umfassen. Race-Bedingungen können auch bestimmt werden, wenn die monolithische Anwendung mehrere Threads aufweist. Race-Bedingungen können sich auf eine Situation beziehen, in der eine korrekte Ausführung eines Programms von einem Timing oder einer Sequenz von Ereignissen abhängt, die gleichzeitig stattfinden. Dies kann zu unvorhersehbarem Verhalten oder Fehlern im Programm führen.

In einem nächsten möglichen Schritt wird mindestens eine mögliche Zerlegung der monolithischen Anwendung in Module auf der Basis des erzeugten Verhaltensprofils bestimmt. Anders ausgedrückt, kann anhand von diesem Schritt analysiert werden, wie die monolithische Anwendung in verschiedene Teile aufgeteilt werden kann. Diese Teile können Einzelsoftwarefunktionen oder -module oder Kombinationen von Softwarefunktionen oder -modulen umfassen.

In einem nächsten möglichen Schritt wird ein Einsatz der Module auf ein verteiltes System eingeleitet, um eine verteilte Anwendung bereitzustellen. Anders ausgedrückt, kann die verteilte Anwendung die monolithische Anwendung in einer verteilten Form repräsentieren, d.h., eine Funktionalität der monolithischen Anwendung wird durch mindestens zwei unterschiedliche Module des verteilten Systems bereitgestellt. Diese zwei Instanzen können auf einer einzigen Datenverarbeitungsvorrichtung oder auf mehreren Datenverarbeitungsvorrichtungen, insbesondere auf Edge-Knoten, laufen.

In einem nächsten möglichen Schritt wird eine Überwachung eines Laufzeitverhaltens der verteilten Anwendung eingeleitet. Die Überwachung wird insbesondere auf ähnliche Weise wie bei der Analyse der monolithischen Anwendung während der Laufzeit dieser und gegebenenfalls auch der statischen Analyse der monolithischen Anwendung durchgeführt, d.h., es können dieselben Parameter und Eigenschaften bestimmt werden, um einen Vergleich der verteilten Anwendung mit der monolithischen Anwendung zu erlauben.

In einem nächsten möglichen Schritt wird eine Optimierung der Zerlegung und des Einsatzes der Module durch Maximieren einer Ähnlichkeit zwischen der monolithischen Anwendung und der verteilten Anwendung eingeleitet. Dazu kann ein Vergleich eines Verhaltensprofils der verteilten Anwendung mit dem Verhaltensprofil der monolithischen Anwendung gehören, indem diese entweder parallel laufen gelassen werden oder durch Vergleichen des Verhaltensprofils der verteilten Anwendung mit dem zuvor erzeugten Verhaltensprofil der monolithischen Anwendung. Dieser Schritt kann iteratives Anpassen des Einsatzes sowohl durch Erzeugen von alternativen Modulzerlegungen als auch durch Ändern einer Platzierung der resultierenden Module in dem verteilten System umfassen.

Das Verfahren gemäß der Erfindung kann einen innovativen Ansatz bereitstellen, um die Probleme der Optimierung des Einsatzes auf Edge-Knoten anzugehen. Durch aktives Aufnehmen der monolithischen Anwendung in den Optimierungsprozess kann das Verfahren ihren verteilten Einsatz optimieren, um Ähnlichkeit zwischen den Verhaltensweisen der monolithischen und verteilten Anwendung zu maximieren. Dieses dynamische Zerlegungs- oder Verteilungsschema kann eine Anpassbarkeit an sich dynamisch ändernde Einsatzbedingungen, wie etwa variierende Edge-Knotenressourcen oder Vernetzungsfähigkeiten, ermöglichen, wodurch ein effizienterer und effektiverer Einsatz der Anwendung erlaubt wird.

Vorteile des Verfahrens gemäß der Erfindung können Folgendes umfassen: eine Wiederverwendung existierender echtzeitkritischer monolithischer Anwendungen kann in verteilten Systemen ohne jegliche manuelle Umfaktorierungsarbeit ermöglicht werden. Verteilte Einsätze können für aktuell zentralisierte monolithische Anwendungen (oder einige davon) ermöglicht werden, um effiziente Auslastung verteilter Ressourcen zu verbessern. Eine ressourceneffiziente Benutzung von Redundanz oder Replikation kann für lediglich die Teile einer (monolithischen) Anwendung ermöglicht werden, die Hochverfügbarkeits- oder (Sicherheits-) Integritätsanforderungen aufweisen. Ein Mechanismus zur Zerlegung von Anwendungen kann für Anwendungen implementiert werden, die in einer beliebigen Sprache geschrieben sind, die zu einer virtualisierten Bytecode-Repräsentationen (z. B. WASM) kompiliert werden kann, im Gegensatz zu sprachenspezifischen Mechanismen. Ein Mechanismus für die Zerlegung von Anwendungen kann bereitgestellt werden, der keinerlei Zugriff auf die Quellcodedateien der Anwendung (z. B. C/C++/Rust/...-Dateien) erfordert, sondern möglicherweise lediglich Zugriff auf die kompilierte virtualisierte Bytecode-Repräsentation erfordert. Dies kann erforderlichenfalls einen Schutz der Vertraulichkeit einer implementierten Unternehmenslogik unterstützen. Mittels ausführlichem Laufzeit Vergleich mit dem Verhaltensprofil der monolithischen Anwendung, insbesondere hinsichtlich Übergangszuständen und Timingverhalten, kann eine automatisierte Selbstverifikation der gewählten Zerlegung ermöglicht werden.

Es ist möglich, dass der Einsatz der monolithischen Anwendung in einer Bytecode-Repräsentation der monolithischen Anwendung durchgeführt wird. Eine Bytecode-Repräsentation ist insbesondere ein maschinenlesbarer Code auf niedriger Ebene, der aus einer höheren Programmiersprache erzeugt werden kann. Sie kann eine Menge von Anweisungen sein, die durch eine virtuelle Maschine oder einen Interpreter ausgeführt werden können, und ist insbesondere dafür ausgelegt, plattformunabhängig zu sein. Die Bytecode-Repräsentation kann verwendet werden, um Leistungsfähigkeit und Portierbarkeit von Anwendungen zu verbessern. Es ist möglich, dass der Einsatz der monolithischen Anwendung in einer virtualisierten Bytecode-Repräsentation, wie etwa WASM, durchgeführt wird. Dieser Ansatz kann eine programmiersprachenunabhängige Erzeugung eines ausführlichen Verhaltensprofils der monolithischen Anwendung ermöglichen, das dann verwendet werden kann, um vielversprechende Aufteilungen in Module zu bestimmen. Dies kann ferner eine Nutzung von Untersuchungsfähigkeiten der virtualisierten Bytecode-Repräsentation (z. B. WASM) erlauben, um vielversprechende Aufteilungen in Module zu bestimmen und um eine Ausführungszeit dieser Module auf verfügbaren Edge-Ressourcen des verteilten Systems zu schätzen.

Es ist auch möglich, dass das Erzeugen des Verhaltensprofils den folgenden Schritt umfasst:
- Überwachen eines internen Zustands sowie von Eingaben und Ausgaben der monolithischen Anwendung, wobei die Eingaben und Ausgaben mit Bezug auf jeweilige Werte und ein Timingverhalten überwacht werden.

Überwachen des internen Zustands, von Eingaben und Ausgaben der monolithischen Anwendung kann vorteilhafterweise extensive Einsichten zur Erzeugung des ausführlichen Verhaltensprofils bereitstellen. Die Eingaben können aus einer Erfassung mindestens eines Sensors der Datenverarbeitungs Vorrichtung resultieren, und die Ausgaben können Steuersignale für mindestens einen Aktor der Datenverarbeitungsvorrichtung sein. Es ist auch möglich, dass die Eingaben und/oder Ausgaben mindestens teilweise aus mindestens einer anderen Anwendung oder Datenquelle, wie etwa einer Datenbank, die sich mit der monolithischen Anwendung in Kommunikation befindet, resultieren.

Es ist möglich, dass das Bestimmen der mindestens einen möglichen Zerlegung den folgenden Schritt umfasst:
- Instrumentieren und Analysieren der Bytecode-Repräsentation der monolithischen Anwendung.

Das Instrumentieren kann Injizieren von Verzögerungen zwischen Programmteilen der Bytecode-Repräsentation umfassen. Das Analysieren kann Identifizieren von Mustern oder Komponenten der monolithischen Anwendung, die nicht aufgeteilt werden können, ohne einen Fehler oder unerwünschtes Verhalten der monolithischen Anwendung zu verursachen, umfassen. Dieser Schritt kann vorteilhafterweise das Erzeugen eines ausführlichen Verhaltensprofils der monolithischen Anwendung erlauben, wodurch es dem Verfahren ermöglicht wird, vernünftige Aufteilungen in Module genau zu identifizieren.

Es ist ferner möglich, dass das Bestimmen der mindestens einen möglichen Zerlegung ferner den folgenden Schritt umfasst:
- Herausfiltern von Zerlegungen, die mindestens eine Echtzeit- und/oder interne Zustandsstimmigkeitsanforderung kompromittieren.

Dieser Schritt kann vorteilhafterweise erlauben, potentielle Modulaufteilungen zu eliminieren, die zu Unstimmigkeiten oder Unterbrechungen einer Leistungsfähigkeit der verteilten Anwendung führen können. Dieser Schritt kann auf einem Ergebnis des Instrumentierens und Analysierens der Bytecode-Repräsentation basieren, wobei diese Zerlegungen, die die mindestens eine Echtzeit- und/oder interne Zustandsstimmigkeitsanforderung kompromittieren, bestimmt werden können. Die Echtzeit- und/oder interne Zustandsstimmigkeitsanforderung kann sich auf eine Notwendigkeit beziehen, dass die Anwendung in Echtzeit einen stimmigen und aktuellen internen Zustand aufrechterhält, d.h., ohne jegliche Verzögerung oder Verzug. Dies kann wichtig sein, um sicherzustellen, dass die Anwendung korrekt funktioniert und das alle Daten oder Informationen, die sie verarbeitet, genau und zuverlässig sind. Anders ausgedrückt, muss die Anwendung möglicherweise in der Lage sein, in Echtzeit mit Daten umzugehen und diese zu verarbeiten, während sie einen stimmigen internen Zustand aufrechterhält, um sicherzustellen, dass eine Ausgabe korrekt und zuverlässig ist.

Es ist auch möglich, dass das Einleiten des Einsatzes der Module auf dem verteilten System unter Berücksichtigung mindestens eine Ressourceneigenschaft des verteilten Systems durchgeführt wird. Die mindestens eine Ressourceneigenschaft kann eine Rechenleistung, Speicherkapazität und/oder Netzwerkbandbreite mindestens einer Datenverarbeitungsvorrichtung des verteilten Systems sein, insbesondere mindestens eines Edge-Knotens des verteilten Systems. Dies kann durchgeführt werden, um vorteilhafterweise eine optimale Zuteilung und Ausführung der Module sicherzustellen. Dies kann effizientere Benutzung von Ressourcen und bessere insgesamte Leistungsfähigkeit der verteilten Anwendung erlauben.

Es ist möglich, dass das Einleiten der Optimierung iterativ und/oder unter Berücksichtigung des erzeugten Verhaltensprofils der monolithischen Anwendung durchgeführt wird. Dies kann vorteilhafterweise genauere Einstellung der Zerlegung und des Einsatzes der Module erlauben. Berücksichtigung des erzeugten Verhaltensprofils der monolithischen Anwendung kann durchgeführt werden, um einen erforderlichen oder definierten Grad an Ähnlichkeit zwischen der verteilten und der monolithischen Anwendung zu erzielen.

In einem anderen Aspekt der Erfindung kann ein Computerprogramm bereitgestellt werden, insbesondere ein Computerprogrammprodukt, das Anweisungen umfasst, die, wenn das Computerprogramm durch einen Computer ausgeführt wird, bewirken, dass der Computer das Verfahren gemäß der Erfindung ausführt. Somit kann das Computerprogramm gemäß der Erfindung dieselben Vorteile wie ausführlich unter Bezugnahme auf ein Verfahren gemäß der Erfindung beschrieben aufweisen.

In einem anderen Aspekt der Erfindung kann eine Vorrichtung zur Datenverarbeitung bereitgestellt werden, die dafür ausgelegt ist, das Verfahren gemäß der Erfindung auszuführen. Als die Vorrichtung kann zum Beispiel ein Computer bereitgestellt werden, der das Computerprogramm gemäß der Erfindung ausführt. Der Computer kann mindestens einen Prozessor umfassen, der verwendet werden kann, um das Computerprogramm auszuführen. Außerdem kann ein nichtflüchtiger Datenspeicher bereitgestellt werden, in dem das Computerprogramm gespeichert werden kann und aus dem das Computerprogramm durch den Prozessor zur Ausführung gelesen werden kann.

Gemäß einem anderen Aspekt der Erfindung kann ein computerlesbares Speicherungsmedium bereitgestellt werden, dass das Computerprogramm gemäß der Erfindung und/oder Anweisungen umfasst, die, wenn sie durch einen Computer ausgeführt werden, bewirken, dass der Computer die Schritte des Verfahrens gemäß der Erfindung ausführt. Das Speicherungsmedium kann als eine Datenspeicherungsvorrichtung gebildet werden, wie etwa eine Festplatte und/oder ein nichtflüchtiger Speicher und/oder eine Speicherkarte und/oder ein Halbleiterlaufwerk. Das Speicherungsmedium kann zum Beispiel in den Computer integriert sein.

Ferner kann das Verfahren gemäß der Erfindung als ein computerimplementiertes Verfahren implementiert werden. Als Alternative oder zusätzlich kann mindestens einer der offenbarten Verfahrensschritte computerimplementiert und/oder automatisiert sein.

Weitere Vorteile, Merkmale und Einzelheiten der Erfindung gehen aus der folgenden Beschreibung hervor, in der Ausführungsformen der Erfindung ausführlich unter Bezugnahme auf die Zeichnungen beschrieben werden. In diesem Kontext können die in den Ansprüchen und in der Beschreibung erwähnten Merkmale einzeln oder in einer beliebigen Kombination für die Erfindung entscheidend sein. Es zeigen:
- Fig. 1:: ein Verfahren, Computerprogramm, Speicherungsmedium und eine Vorrichtung gemäß Ausführungsformen der Erfindung,
- Fig. 2:: eine beispielhafte monolithische Anwendungsarchitektur gemäß Ausführungsformen der Erfindung,
- Fig. 3:: eine beispielhafte verteilte Anwendungsarchitektur gemäß Ausführungsformen der Erfindung.

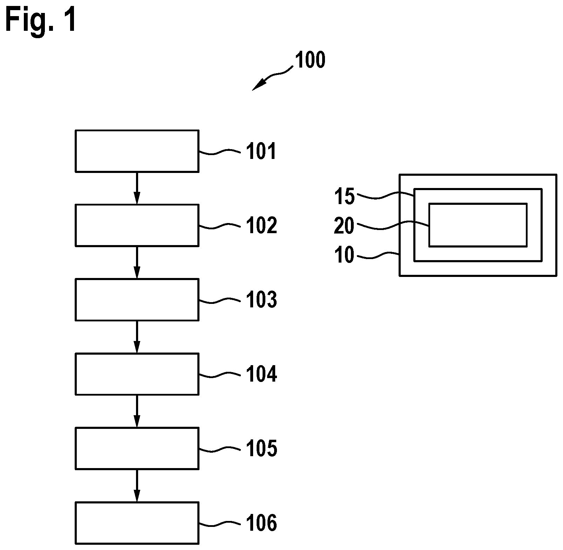

Fig. 1 zeigt ein Verfahren 100, ein Computerprogramm 20, ein Speicherungsmedium 15 und eine Vorrichtung 10 gemäß Ausführungsformen der Erfindung.

Insbesondere zeigt Fig. 1 eine Ausführungsform eines Verfahrens 100 zum Zerlegen und Verteilen einer monolithischen Anwendung. In einem ersten Schritt 101 wird die monolithische Anwendung auf einer Datenverarbeitungsvorrichtung 1 eingesetzt. In einem zweiten Schritt 102 wird auf der Basis einer Analyse der monolithischen Anwendung während einer Laufzeit davon ein Verhaltensprofil der monolithischen Anwendung erzeugt. Das Verhaltensprofil der monolithischen Anwendung kann ferner auf der Basis einer statistischen Analyse der monolithischen Anwendung verbessert werden. In einem dritten Schritt 103 wird auf der Basis des erzeugten Verhaltensprofils mindestens eine mögliche Zerlegung der monolithischen Anwendung in Module 2 bestimmt. In einem vierten Schritt 104 wird ein Einsatz der Module 2 auf einem verteilten System 3 eingeleitet, um eine verteilte Anwendung bereitzustellen. In einem fünften Schritt 105 wird eine Überwachung eines Laufzeitverhaltens der verteilten Anwendung eingeleitet. In einem sechsten Schritt 106 wird eine Optimierung der Zerlegung und des Einsatzes der Module 2 durch Maximieren einer Ähnlichkeit zwischen der monolithischen Anwendung und der verteilten Anwendung eingeleitet.

Die Erfindung gemäß Ausführungsformen konzentriert sich auf eine Zerlegung und/oder Verteilung von Echtzeit- und sicherheitskritischen Anwendungen in cyberphysischen Systemen, was insbesondere aufgrund ihrer Timing- und Zustandsempfindlichkeit ein noch schwierigeres Problem ist.

Getrennter Einsatz der zerlegten Module kann bedeuten, dass (a) eine Kommunikation zwischen den Modulen signifikant länger dauern kann, und (b) die Anwendung für unstimmige, potentiell unsichere Zustände anfällig sein kann, was sich aus Race -Bedingungen zwischen den einzelnen Zuständen der Module ergeben kann. Diese Situation kann während einer monolithischen Ausführung nicht auftreten, bei der die gesamte Anwendung an einem geteilten "atomischen" Zustand operiert. Diese zwei Aspekte lassen sich mäglicherweise nur schwer in eine formelle statische Analyse integrieren.

Eine Modularisierungslösung, die auf eine spezifische Art oder Instanz eines verteilten Systems passt, passt aufgrund verschiedener Systemfähigkeiten, z. B. bezüglich verfügbarer Knoten und/oder Ressourcen und/oder Kommunikationsverbindungen, möglicherweise nicht auf andere Arten oder Instanzen.

Für echtzeitkritische Anwendungen müssen möglicherweise auch dynamische Aspekte wie Laufzeit-Ressourcenbenutzung und Timings des funktionalen Verhaltens berücksichtigt werden, um verglichen mit einer monolithischen Implementierung denselben oder sogar einen noch besseren Grad an Zuverlässigkeit zu erreichen. Dies kann insbesondere problematisch werden, wenn die verfügbaren Rechen- und Vernetzungsressourcen dynamisch zwischen mehreren unabhängigen Anwendungen geteilt werden.

Das Verfahren gemäß Ausführungsformen der Erfindung betrifft eine automatisierte Technik für eine dynamische Zerlegung von monolithischem Code in Module, die auf heterogenen verteilten Ressourcen eingesetzt werden können, während Echtzeit- und Verhaltensanforderungen des monolithischen Codes bewahrt werden.

Das Verfahren gemäß Ausführungsformen der Erfindung beschreibt eine auf Laufzeitverhaltensbeobachtung basierende Technik zum automatischen Modularisieren oder Aufteilen einer monolithischen Anwendungssoftware für einen verteilten Einsatz auf mehreren verbundenen Edge-Rechenknoten.

Das Verfahren gemäß Ausführungsformen der Erfindung basiert insbesondere auf dem Kompilieren monolithischer Anwendungssoftware in eine virtualisierte Bytecode-Repräsentation, z. B. das Format WASM (WebAssembly), und Benutzen von auf Bytecode-Virtualisierung basierenden Laufzeit-Untersuchungsfähigkeiten, um die folgenden Schritte auszuführen:
In einem ersten Schritt kann auf der Basis einer Beobachtung des Laufzeitverhaltens der monolithischen Anwendung ein Modell der Steuer- und Datenflüsse und Laufzeiteigenschaften verschiedener Bytecode-Abschnitte erzeugt werden. In diesem Schritt können Laufzeituntersuchungsmechanismen der virtualisierten Bytecode-Repräsentation (z. B. WASM) verwendet werden, um eine Laufzeit verschiedener Aufteilungsmöglichkeiten zu analysieren und zu schätzen, während verschiedene Instrumentationen der monolithischen Anwendung verwendet werden können, um zu prüfen, ob bestimmte Aufteilungen zu Timingverstößen (z. B. verpasste Fristen oder zu frühe/zu späte E/A-Operationen) oder einem unstimmigen/unsicheren Anwendungszustand führen.

In einem zweiten Schritt können sich aus dem ersten Schritt ergebende Informationen verwendet werden, um die monolithische Anwendung automatisch in mehrere Module aufzuteilen, die dann auf dem verteilten System eingesetzt werden können. Hierbei können die Beschränkungen von dem verteilten Zielsystem (z. B. Anzahl und Art der Ressourcen der Edge-Rechenknoten, Netzwerkressourcen...) sowohl für die Aufteilungs- als auch die Einsatzentscheidungen berücksichtigt werden.

In einem dritten Schritt können gewählte Aufteilungspunkte und der Einsatz der resultierenden Module in einer Optimierungsschleife, die die Laufzeitverhalten-Ähnlichkeit (insbesondere in Bezug auf Eingabe- und Ausgabe- bzw. E/A-Timings und beabsichtigtes funktionales Verhalten) zwischen der parallel ausgeführten unmodifizierten monolithischen Anwendung und den verteilten Anwendungsmodulen maximiert, iterativ verfeinert werden.

Zu Vorteilen der Erfindung gemäß Ausführungsformen können die Folgenden gehören: eine Wiederverwendung existierender echtzeitkritischer monolithischer Anwendungen kann in verteilten Systemen ohne jegliche manuelle Umfaktorierungsarbeit ermöglicht werden. Verteilte Einsätze können für aktuell zentralisierte monolithische Anwendungen (oder einige davon) ermöglicht werden, um effiziente Auslastung verteilter Ressourcen zu verbessern. Eine ressourceneffiziente Benutzung von Redundanz oder Replikation kann für lediglich die Teile einer (monolithischen) Anwendung ermöglicht werden, die Hochverfügbarkeits- oder (Sicherheits-) Integritätsanforderungen aufweisen. Ein Mechanismus zur Zerlegung von Anwendungen kann für Anwendungen implementiert werden, die in einer beliebigen Sprache geschrieben sind, die zu einer virtualisierten Bytecode-Repräsentationen (z. B. WASM) kompiliert werden kann, im Gegensatz zu sprachenspezifischen Lösungen. Ein Mechanismus für die Zerlegung von monolithischen Anwendungen kann bereitgestellt werden, der keinerlei Zugriff auf die Quellcodedateien der Anwendung (z. B. C/C++/Rust/...-Dateien) erfordert, sondern möglicherweise lediglich Zugriff auf die kompilierte virtualisierte Bytecode-Repräsentation erfordert. Dies kann erforderlichenfalls einen Schutz der Vertraulichkeit einer implementierten Unternehmenslogik unterstützen. Mittels ausführlichem Laufzeit Vergleich mit dem Verhaltensprofil der monolithischen Anwendung, insbesondere hinsichtlich Übergangszuständen und Timingverhalten, kann eine automatisierte Selbstverifikation der gewählten Zerlegung ermöglicht werden.

Verglichen mit statischen Ansätzen kann das dynamische Zerlegungs- oder Verteilungsschema gemäß Ausführungsformen der Erfindung den Vorteil größerer Anpassbarkeit an sich dynamisch ändernde Einsatzbedingungen, wie z. B. etwa variierende Menge und Arten von Edge-Rechenknoten, Vernetzungsfähigkeiten oder Edge-Rechenknoten-spezifische (dynamisch variierende) Ressourcenbeschränkungen, ermöglichen.

Das Verfahren gemäß Ausführungsform der Erfindung geht die oben erwähnten Probleme durch aktives Aufnehmen der monolithischen Anwendung in einen Optimierungsprozess an, der ihren verteilten Einsatz sowohl im Hinblick auf die Anwendungsaufteilung als auch im Hinblick auf den verteilten Einsatz der resultierenden Anwendungsteile iterativ optimiert.

Das Verfahren gemäß Ausführungsformen der Erfindung kann die folgenden Schritte umfassen:
In einem ersten Schritt kann die monolithische Anwendung auf nicht-verteilte Weise in einer virtualisierten Bytecode-Repräsentation (z. B. WASM) eingesetzt werden. In einem zweiten Schritt können ein interner Zustand und E/A-Signale (mit Bezug auf Werte und Timing) der monolithischen Anwendung beobachtet und in einem ausführlichen Verhaltensprofil aufgezeichnet werden. In einem dritten Schritt können Untersuchungsfähigkeiten der virtualisierten Bytecode-Repräsentation (z. B. WASM) verwendet werden, um vielversprechende Aufteilungen in Module zu bestimmen und eine Ausführungszeit dieser Module auf verfügbaren Edge-Ressourcen des verteilten Systems zu schätzen. In einem vierten Schritt können Instrumentierungsmechanismen des virtualisierten Bytecodes (z. B. WASM) verwendet werden, um Modulaufteilungen, die die Echtzeit- oder Zustandsstimmigkeitsanforderungen der Anwendung kompromittieren würden, herauszufiltern. In einem fünften Schritt kann die Anwendung auf einem verteilten (z. B. Edge -Rechen-) System auf verteilte Weise eingesetzt werden. In einem sechsten Schritt kann ein Laufzeitverhalten der Module der Anwendung in dem verteilten Einsatz insbesondere in Bezug auf einen internen Zustand, E/A-Signale, Timings und ein funktionales Verhalten beobachtet werden. In einem siebten Schritt kann eine gemeinsame iterative Optimierung der Anwendungszerlegung und des Einsatzes der resultierenden Module durchgeführt werden, wobei eine Ähnlichkeit zwischen den Verhaltensweisen des monolithischen und des verteilten Einsatzes (und andere Ziele, z. B. Verfügbarkeit oder Ressourcenauslastung) maximiert werden.

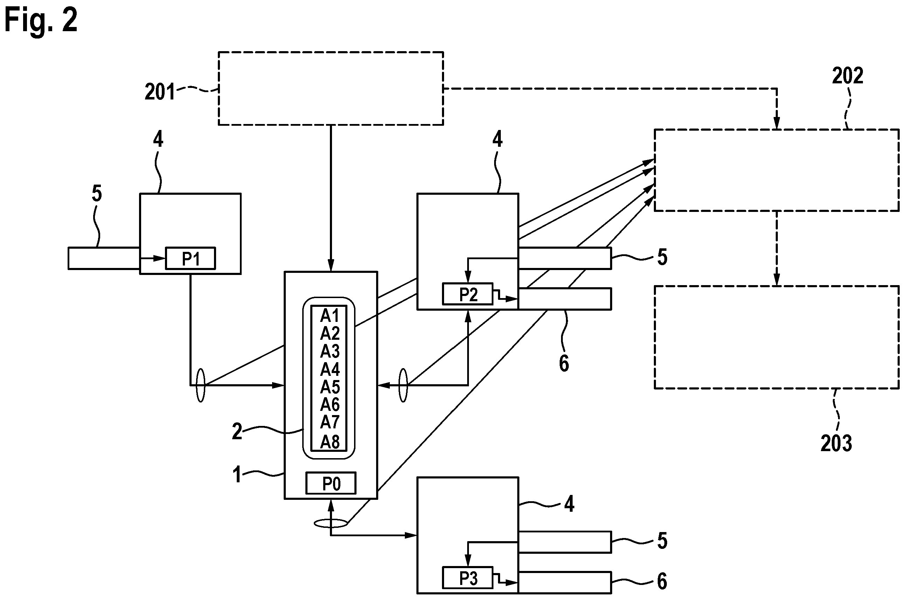

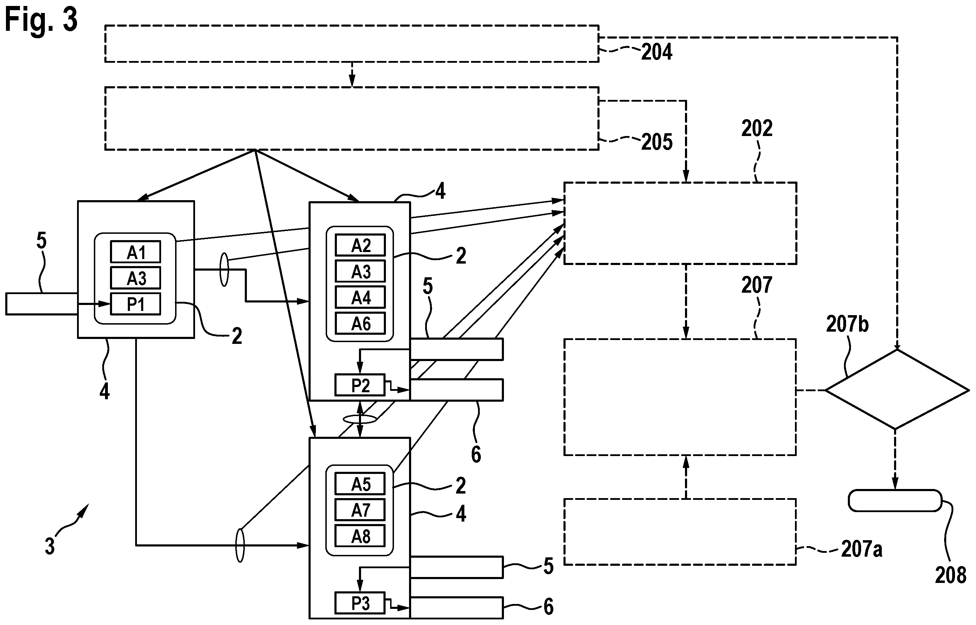

Im Folgenden wird eine beispielhafte Implementierung jedes der Schritte in dem obigen Paragrafen mit Bezug auf Fig. 2 und 3 beschrieben:
Gemäß dem ersten Schritt 201 wird ein Einsatz der monolithischen Anwendung (kompiliert in eine virtualisierte Bytecode-Repräsentation (z. B. WASM)) auf einer Datenverarbeitungsvorrichtung 1 durchgeführt, die bei dieser Ausführungsform ein Server ist, und kann dort ihre beabsichtigte Funktionalität ausführen. Somit können alle Module 2, d.h., die Module A1 bis A8, auf dem Server eingesetzt werden. Nur individuelle Plattformsoftware P1 bis P3 kann auf den Edge-Knoten 4 eingesetzt werden. Gemäß dem zweiten Schritt 202 können dann der monolithischen Anwendung zugeführte Eingaben und durch diese erzeugte Ausgaben sowohl im Hinblick auf ihre Werte als auch im Hinblick auf ihr relatives Timing überwacht werden. Die Eingaben können zum Beispiel Sensordaten von mindestens einem Sensor 5 umfassen. Die Ausgaben können zum Beispiel Aktorsignale umfassen, die für mindestens einen Aktor 6 ausgelegt sind. Das Ziel dieses Schritts kann darin bestehen, ein Profil des Verhaltens der monolithischen Anwendung zu erhalten, entweder durch eine kontinuierliche Überwachung oder durch Erlernen einer Beziehung zwischen den Eingangs- und den Ausgangssignalen. Gemäß dem dritten Schritt 203, der auch offline ausgeführt werden kann, kann die virtualisierte Bytecode-Repräsentation der monolithischen Anwendung analysiert werden, um vernünftige Weisen ihrer Aufteilung in die Module 2 zu identifizieren und um die deterministische Semantik der Bytecode-Repräsentation (z. B. WASM) zu nutzen, um die Laufzeit dieser Module 2 auf Edge-Knoten 4 eines verteilten Systems 3, wo die Anwendung einzusetzen ist, zu schätzen. Physische E/A-Zeitsynchronisation betreffende Wartefunktionen in der monolithischen Anwendung können identifiziert und entfernt werden (z. B. durch Beobachten von spezifischen Systemaufrufen oder des Zugriffs auf externen Zustand anderer Anwendungen). Gemäß dem vierten Schritt 204 kann ein Code der monolithischen Anwendung iterativ neu kompiliert und neu eingesetzt werden. Hierbei kann jede Iteration einer möglichen Aufteilung der monolithischen Anwendung entsprechen. Bei jeder Iteration kann der Bytecode der monolithischen Anwendung mit Instrumentation ergänzt werden, wodurch Verzögerungen zwischen Programmteilen der monolithischen Anwendung eingeführt werden können, die Teil verschiedener Module 2 in der untersuchten Aufteilung wären. Durch Laufenlassen dieser instrumentierten Version der monolithischen Anwendung kann ein Suchraum möglicher Aufteilungen gestutzt werden, indem Aufteilungen, die zu unstimmigen Zuständen und/oder Sicherheitsverstößen führen, entfernt und gültige Aufteilungen mit einer maximalen Zeit annotiert werden, die zwischen ihrer Ausführung vergehen kann, ohne gegen die Timingbeschränkungen der Gesamtanwendung zu verstoßen. Gemäß dem fünften Schritt 205 kann eine Menge von gültigen Aufteilungen des vierten Schritts 204 einem Optimierer oder Orchestrierer (nicht gezeigt) bereitgestellt werden, der die Informationen über die erwartete Laufzeit des dritten Schritts 203 der Module 2 und die Timingbeschränkungen für die Kommunikation zwischen Modulen 2 des vierten Schritts 204 verwenden kann. Dies kann durchgeführt werden, um (a) eine Aufteilung zu wählen und einen vielversprechenden Einsatz ihrer Module 2 auf den verfügbaren Edge-Ressourcen zu finden, (b) automatisch die Module 2 zu erzeugen, indem die monolithische Anwendung aufgeteilt wird, und (c) die Module 2 auf den verteilten Ressourcen einzusetzen. Gemäß dem sechsten Schritt 206 kann während einer Laufzeit der verteilten Anwendung diese kontinuierlich überwacht werden, insbesondere ähnlich wie bei der Überwachung der monolithischen im zweiten Schritt 202. Gemäß dem siebten Schritt 207 kann dann das Verhaltensprofil des verteilten Einsatzes mit dem der monolithischen Anwendung verglichen werden, indem sie entweder parallel laufen gelassen werden oder indem es mit dem im zweiten Schritt 202 erlernten Verhaltensmodell verglichen wird. Ein Optimierer oder Orchestrierer kann hierfür verwendet werden, der den Einsatz iterativ anpasst, indem sowohl alternative Modulaufteilungen erzeugt werden als auch die Platzierung der resultierenden Module 2 der Anwendung geändert wird. Dies kann durchgeführt werden, um (a) eine Ähnlichkeit zwischen dem beobachteten Verhalten der verteilten Anwendung und dem Verhaltensprofil der monolithischen zu maximieren und (b) Sekundärziele zu optimieren, wie etwa Ressourcenauslastung. Wenn die Ähnlichkeitskriterien noch nicht erreicht wurden, kann das Verfahren vom vierten Schritt 204 an iterativ wiederholt werden.

Die obige Erläuterung der Ausführungsformen beschreibt die vorliegende Erfindung im Kontext von Beispielen. Natürlich können einzelne Merkmale der Ausführungsformen frei miteinander kombiniert werden, solange dies technisch vernünftig ist, ohne den Schutzumfang der vorliegenden Erfindung zu verlassen.

## Patentansprüche

1. Verfahren (100) zum Zerlegen und Verteilen einer monolithischen Anwendung, das die folgenden Schritte umfasst:
- Einsetzen (101) der monolithischen Anwendung auf einer Datenverarbeitungsvorrichtung (1),
- Erzeugen (102) eines Verhaltensprofils der monolithischen Anwendung auf der Basis einer Analyse der monolithischen Anwendung während einer Laufzeit davon,
- Bestimmen (103) mindestens einer möglichen Zerlegung der monolithischen Anwendung in Module (2) auf der Basis des erzeugten Verhaltensprofils,
- Einleiten (104) eines Einsatzes der Module (2) auf einem verteilten System (3), um eine verteilte Anwendung bereitzustellen,
- Einleiten (105) einer Überwachung eines Laufzeitverhaltens der verteilten Anwendung,
- Einleiten (106) einer Optimierung der Zerlegung und des Einsatzes der Module (2) durch Maximieren einer Ähnlichkeit zwischen der monolithischen Anwendung und der verteilten Anwendung.

2. Verfahren (100) nach Anspruch 1, **dadurch gekennzeichnet, dass** das Einsetzen (101) der monolithischen Anwendung in einer Bytecode-Repräsentation der monolithischen Anwendung durchgeführt wird.

3. Verfahren (100) nach einem der vorhergehenden Ansprüche, **dadurch gekennzeichnet, dass** das Erzeugen (102) des Verhaltensprofils den folgenden Schritt umfasst:
- Überwachen eines internen Zustands sowie von Eingaben und Ausgaben der monolithischen Anwendung, wobei die Eingaben und Ausgaben mit Bezug auf jeweilige Werte und ein Timingverhalten überwacht werden.

4. Verfahren (100) nach einem der Ansprüche 2 oder 3, **dadurch gekennzeichnet, dass** das Bestimmen (103) der mindestens einen möglichen Zerlegung den folgenden Schritt umfasst:
Instrumentieren und Analysieren der Bytecode-Repräsentation der monolithischen Anwendung.

5. Verfahren (100) nach einem der vorhergehenden Ansprüche, **dadurch gekennzeichnet, dass** das Bestimmen (103) der mindestens einen möglichen Zerlegung ferner den folgenden Schritt umfasst:
- Herausfiltern von Zerlegungen, die mindestens eine Echtzeit- und/oder interne Zustandsstimmigkeitsanforderung kompromittieren.

6. Verfahren (100) nach einem der vorhergehenden Ansprüche, **dadurch gekennzeichnet, dass** das Einleiten (104) des Einsatzes der Module (2) auf dem verteilten System (3) unter Berücksichtigung mindestens einer für das verteilte System (3) charakteristischen Ressource durchgeführt wird.

7. Verfahren (100) nach einem der vorhergehenden Ansprüche, **dadurch gekennzeichnet, dass** das Einleiten (106) der Optimierung iterativ und/oder unter Berücksichtigung des erzeugten Verhaltensprofils der monolithischen Anwendung durchgeführt wird.

8. Computerprogramm (20) mit Anweisungen, die, wenn das Computerprogramm (20) durch einen Computer (10) ausgeführt wird, bewirken, dass der Computer (10) das Verfahren (100) nach einem der vorhergehenden Ansprüche ausführt.

9. Datenverarbeitungsvorrichtung (10) mit Mitteln zum Ausführen des Verfahrens (100) nach einem der Ansprüche 1 bis 7.

10. Computerlesbares Speicherungsmedium (15) mit Anweisungen, die, wenn sie durch einen Computer (10) ausgeführt werden, bewirken, dass der Computer (10) das Verfahren (100) nach einem Ansprüche 1 bis 7 ausführt.
